# EUROPEAN PATENT APPLICATION

(11) **EP 4 712 236 A1**
(43) Date of publication of application: **18.03.2026**
(21) Application number: 24864093.0
(22) Date of filing: 16.05.2024
(51) Int. Cl.: H01M 50/244

(54) **BATTERY CELL, BATTERY, AND ELECTRIC DEVICE**

(30) Priority: 13.09.2023 CN 202322490867 U
(71) Applicant: Contemporary Amperex Technology Co., Limited, Ningde, Fujian 352100 (CN)
(72) Inventor: WU, Kai, Ningde, Fujian 352100 (CN); LUO, Yan, Ningde, Fujian 352100 (CN); LIN, Denghua, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2024/093725
(87) International publication number: WO 2025/055368

(57) **Abstract**

The present application discloses a battery cell, a battery, and an electric apparatus. The battery cell includes: a housing, the housing including a first surface, a second surface, a third surface, and a flange, where the flange is disposed around the first surface and connected to the first surface, the first surface and the third surface are opposite each other, and the second surface is connected between the flange and the third surface; and an insulating film, wrapped around an exterior of the housing, the insulating film wrapping around at least a portion of the first surface, at least a portion of the flange, at least a portion of the third surface, and at least a portion of the second surface. The insulating film is folded from the flange to the second surface to form a first folded region, and the insulating film is folded from the third surface to the second surface to form a second folded region. Along a direction from the first surface to the third surface, a dimension of the first folded region is smaller than a dimension of the second folded region. The insulating film is also capable of sufficiently wrapping around the housing when the housing is provided with a flange.

## Description

The present application claims priority to Chinese Patent Application No. 2023224908677, filed with the China National Intellectual Property Administration on September 13, 2023, and entitled "BATTERY CELL, BATTERY, AND ELECTRIC APPARATUS", which is incorporated herein by reference in its entirety.

### TECHNICAL FIELD

The present disclosure relates to the field of battery technologies, and in particular, to a battery cell, a battery, and an electric apparatus.

### BACKGROUND

With the advantages such as high energy density, high power density, long cycle life, and long storage time, rechargeable batteries have been widely used in electric vehicles, mobile devices, or electric tools. Existing battery cells typically include a housing and a non-conductive insulating film, where the insulating film is wrapped around an outer surface of the housing to isolate the housing from the external environment for protection. However, when the housing is provided with a protruding flange, it becomes difficult for the insulating film to wrap around the housing, resulting in poor insulation effect of the battery cell.

### SUMMARY

The present disclosure provides a battery cell. The battery cell includes a housing, the housing including a first surface, a second surface, a third surface, and a flange, where the flange is disposed around the first surface and connected to the first surface, the first surface and the third surface are opposite each other, and the second surface is connected between the flange and the third surface; and an insulating film, wrapped around an exterior of the housing, the insulating film wrapping around at least a portion of the first surface, at least a portion of the flange, at least a portion of the third surface, and at least a portion of the second surface; where the insulating film is folded from the flange to the second surface to form a first folded region, the insulating film is folded from the third surface to the second surface to form a second folded region, and along a direction from the first surface to the third surface, a dimension of the first folded region is smaller than a dimension of the second folded region.

By the above method, each of the first surface, the flange, the third surface, and the second surface is wrapped with the insulating film, and the insulating film is also capable of sufficiently wrapping around the housing when the housing is provided with a flange, the housing is well protected by the insulating film, and the stability of the battery cell is improved. Additionally, when wrapping the insulating film around a battery cell with a flange, the insulating film used for wrapping a rectangular battery cell without a flange can be directly used, eliminating the need for separately customizing the shape of the insulating film, which is conducive to cost savings.

In some embodiments, the insulating film is an integral structure.

By the above method, an integral insulating film is more conducive to wrapping around the housing through simple conventional processes such as folding. Compared to an insulating film with a spliced structure, the insulating film does not require additional splicing steps, making the production of the battery cell more convenient.

In some embodiments, a portion of the second surface is exposed between the first folded region and the second folded region for connecting a first adhesive or a first insulating sheet.

By the above method, when the second surface is required to be attached to the first insulating sheet or filling with the first adhesive, the first insulating sheet or the first adhesive can be directly fixed to the portion of the second surface exposed between the first folded region and the second folded region, allowing the adhesive or insulating sheet to be more conveniently connected to the battery cell, facilitating the assembly of the battery cell.

In some embodiments, the first folded region and the second folded region are arranged to overlap.

By the above method, the overlapping first folded region and second folded region provide good protection to the second surface, the insulating film can better cover the second surface, and the insulation effect of the battery cell is better.

In some embodiments, a fourth surface of the housing is disposed opposite the second surface, the insulating film is folded from the flange to the fourth surface to form a third folded region, the insulating film is folded from the third surface to the fourth surface to form a fourth folded region, and along the direction from the first surface to the third surface, a dimension of the third folded region is smaller than a dimension of the fourth folded region.

By the above method, at least a portion of the fourth surface can be wrapped with the insulating film, the insulating film can more comprehensively wrap around the housing, isolating the housing from the external environment, enhancing the stability of the battery cell.

In some embodiments, a portion of the fourth surface is exposed between the third folded region and the fourth folded region for connecting a second adhesive or a second insulating sheet.

By the above method, when the fourth surface is required to be attached to the second insulating sheet or filling with the second adhesive, the second insulating sheet or the second adhesive can be directly fixed to the portion of the fourth surface exposed between the third folded region and the fourth folded region, allowing the adhesive or insulating sheet to be more conveniently connected to the battery cell, facilitating the assembly of the battery cell.

In some embodiments, the third folded region and the fourth folded region are arranged to overlap.

By the above method, the overlapping third folded region and fourth folded region provide good protection to the fourth surface, the insulating film can better cover the fourth surface, and the insulation effect of the battery cell is better.

In some embodiments, a fifth surface of the housing is disposed adjacent to the first surface and the third surface, the fifth surface of the housing is also disposed adjacent to the second surface and the fourth surface, and the insulating film fully covers the fifth surface.

By the above method, the fifth surface can also be wrapped with the insulating film, the insulating film can further wrap around the housing, isolating the housing from the external environment, improving the stability of the battery cell.

In some embodiments, a sixth surface of the housing is disposed opposite the fifth surface, the sixth surface of the housing is located between the second surface and the fourth surface, the sixth surface of the housing is also located between the first surface and the third surface, and the insulating film covers at least a portion of the sixth surface.

By the above method, at least a portion of the sixth surface can be wrapped with the insulating film, the insulating film can more comprehensively wrap around the housing, isolating the housing from the external environment, enhancing the stability of the battery cell.

In some embodiments, the insulating film is folded from the flange to the sixth surface to form a fifth folded region, the insulating film is folded from the third surface to the sixth surface to form a sixth folded region, and along the direction from the first surface to the third surface, a dimension of the fifth folded region is smaller than a dimension of the sixth folded region.

By the above method, before the insulating film is folded from the flange and the third surface to the sixth surface, the dimensions of an end of the insulating film forming the fifth folded region and an end forming the sixth folded region are more similar, simplifying the process of wrapping the insulating film around the battery cell.

In some embodiments, the battery cell further includes an electrode connector, and the electrode connector protrudes from the fourth surface or the sixth surface.

By the above method, the electrode connector protruding from the fourth surface or the sixth surface achieves connection to an external circuit, making the battery cell convenient to use.

In some embodiments, the housing includes a top cover and an integrally formed housing body and flange, where the housing body includes a bottom wall and a side wall, one end of the side wall is connected to the bottom wall, another end is connected to the flange, and the top cover is connected to the flange to form an accommodating space. The side wall includes a first side wall, a second side wall, a third side wall, and a fourth side wall connected in sequence end-to-end, the first side wall is disposed opposite the third side wall, and the second side wall is disposed opposite the fourth side wall. A side of the top cover facing away from the housing body constitutes the first surface, a side of the bottom wall facing away from the top cover constitutes the third surface, a side of the first side wall facing away from the accommodating space constitutes the second surface, a side of the third side wall facing away from the accommodating space constitutes the fourth surface, a side of the second side wall facing away from the accommodating space constitutes the sixth surface, and a side of the fourth side wall facing away from the accommodating space constitutes the fifth surface.

By the above method, the top cover can be well connected to the housing body through the flange, and the electrode connector extends from the fourth surface or the sixth surface, achieving connection to an external circuit, making the battery cell convenient to use.

In some embodiments, the battery cell further includes a top patch, a through-hole is formed on the top patch, the electrode connector is disposed on the sixth surface, a portion of the electrode connector is located in the through-hole, a portion of the sixth surface is exposed between the fifth folded region and the sixth folded region for connecting the top patch, and an edge of the top patch is connected to the insulating film.

By the above method, the top patch can further isolate the sixth surface from the external environment, preventing the sixth surface from being scratched and reducing the risk of a short circuit in the battery cell. Additionally, the top patch can be well fixed to the portion of the sixth surface exposed between the fifth folded region and the sixth folded region, ensuring good stability of the battery cell.

In some embodiments, the insulating film at the sixth surface is arranged in an overlap manner and covers the portion of the sixth surface excluding the electrode connector.

By the above method, the sixth surface of the housing is enclosed within the insulating film, fully isolated from the external environment, and the insulation effect of the battery cell is better.

In some embodiments, an angle is formed between a surface adjacent to the first surface and the flange, and a gap is formed between the insulating film and the housing at the angle.

By the above method, the insulating film does not need to fully attach to the angle, the insulating film may be wrapped more easily, making the production of the battery cell more convenient.

In some embodiments, at the angle, the housing and the insulating film cooperate to form a sealed space.

By the above method, the housing at the angle is isolated from the external environment within the sealed space, allowing the insulating film to provide good protection for the housing even without fully attaching to the angle, making the production of the battery cell convenient and ensuring good stability.

According to a second aspect, the present application provides a battery, where the battery includes the battery cell in the above embodiments.

According to a third aspect, the present application provides an electric apparatus, where the electric apparatus includes the battery in the above embodiments, and the battery is configured to supply power to the electric apparatus.

The foregoing descriptions are merely an overview of the technical solutions of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the accompanying drawings:
FIG. 1 is a schematic structural diagram of a vehicle according to one or more embodiments;
FIG. 2 is a schematic structural exploded view of a battery according to one or more embodiments;
FIG. 3 is a schematic structural exploded view of a battery cell according to one or more embodiments;
FIG. 4 is a schematic structural diagram of a battery cell according to one or more embodiments;
FIG. 5 is a schematic structural diagram of an insulating film according to one or more embodiments;
FIG. 6 is a schematic structural diagram of a second surface of a battery cell according to one or more embodiments;
FIG. 7 is a schematic diagram of portion A in FIG. 6 enlarged;
FIG. 8 is another schematic structural diagram of a second surface of a battery cell according to one or more embodiments;
FIG. 9 is a schematic structural diagram of a fourth surface of a battery cell according to one or more embodiments;
FIG. 10 is a schematic diagram of portion B in FIG. 9 enlarged;
FIG. 11 is another schematic structural diagram of a fourth surface of a battery cell according to one or more embodiments;
FIG. 12 is a schematic structural diagram of a fifth surface of a battery cell according to one or more embodiments;
FIG. 13 is a schematic structural diagram of a sixth surface of a battery cell according to one or more embodiments;
FIG. 14 is a schematic diagram of portion D in FIG. 13 enlarged;
FIG. 15 is a schematic cross-sectional view along line E-E in FIG. 6; and
FIG. 16 is a schematic diagram of portion F in FIG. 15 enlarged.

Reference signs in specific embodiments are described as follows:
1000. vehicle; 200. controller; 300. motor; 100. battery; 10. box; 11. first portion; 12. second portion; and
20. battery cell; 21. electrode assembly; 22. housing; 221. first surface; 222. second surface; 2221. first folded region; 2222. second folded region; 223. third surface; 224. fourth surface; 2241. third folded region; 2242. fourth folded region; 225. fifth surface; 226. sixth surface; 2261. fifth folded region; 2262. sixth folded region; 227. housing body; 2271. bottom wall; 2272. side wall; 2272a. first side wall; 2272b. second side wall; 2272c. third side wall; 2272d. fourth side wall; 2273. opening; 228. top cover; 229. flange; 23. electrode connector; 24. insulating film; 241. first insulating sheet; 242. second insulating sheet; 25. top patch; 251. through-hole; 26. sealed space; and 27. accommodating space.

### DESCRIPTION OF EMBODIMENTS

The following describes in detail some embodiments of technical solutions of the present application. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of some embodiments of the present application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of the present application, the term "a plurality of" means more than two (inclusive). Similarly, "a plurality of groups" means more than two (inclusive) groups, and "a plurality of pieces" means more than two (inclusive) pieces, unless otherwise specifically defined.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

Currently, from the perspective of market development, application of traction batteries is being more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also expanding.

A battery cell typically includes a housing and an insulating film, where the insulating film is made of a non-conductive insulating material. The insulating film is typically wrapped around an outer surface of the housing to isolate the housing from the external environment, providing insulation protection. However, this approach has some issues. For example, when the housing is provided with a protruding flange, the outer surface of the housing is uneven at the flange, so that the wrapping difficulty of the insulating film is increased, making it difficult for the insulating film to fully wrap around the housing. When the housing is not sufficiently wrapped, the battery cell is prone to insulation failure, affecting the stability of the battery cell.

Based on the above considerations, to address the technical problems of battery cells in the prior art, the present application proposes a battery cell, and the insulating film is capable of effectively wrapping around the housing when the housing is provided with a flange.

The present application provides an electric apparatus, and the electric apparatus may include, but is not limited to, a mobile phone, a computer, a vehicle, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of the present application being a vehicle is used as an example for description of the following embodiments.

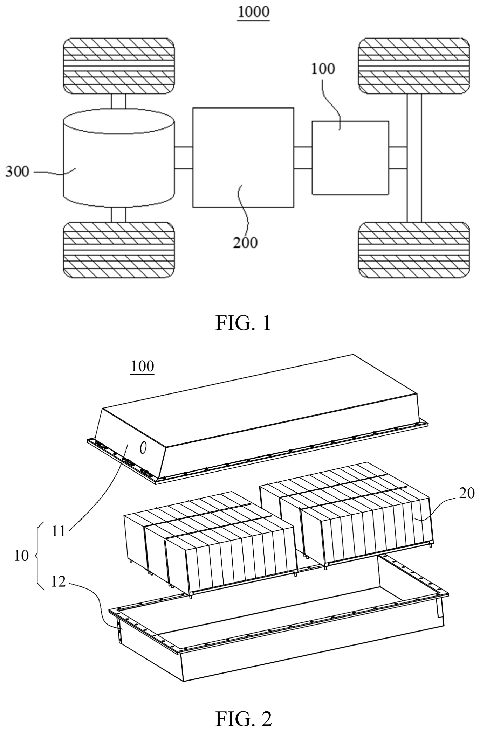

Referring to FIG. 1, FIG. 1 is a schematic structural diagram of a vehicle according to one or more embodiments.

The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

According to some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

To enhance the performance of the electric apparatus, the present application further provides a battery 100. Referring to FIG. 2, FIG. 2 is a schematic structural exploded view of a battery according to one or more embodiments. The shape of the battery 100 includes, but is not limited to, a rectangular shape. In other embodiments, the shape of the battery 100 may also be cylindrical, rectangular, or any other shape. The battery 100 may be an energy storage apparatus or the like. The energy storage apparatus is a type of battery 100 that can be used in power grids, household, or commercial scenarios for storing and/or releasing electrical energy.

In some embodiments, the battery 100 may include a box 10 and a battery cell 20, where the battery cell 20 is accommodated within the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

The manufacturing methods of the battery 100 include lamination and winding, that is, the battery 100 can be divided into laminated batteries and wound batteries. Laminated batteries have uniform current collection effects, low internal resistance, and high specific power but require extremely high mold precision, high equipment investment, complex processes, and low production efficiency. Wound batteries are simple to manufacture, have moderate requirements for equipment precision during sheet production and assembly, resulting in high production efficiency and lower costs. In terms of performance, wound batteries exhibit excellent high- and low-temperature performance, rapid charging capabilities, ultra-long service life, stable high output voltage, robust structure, and strong shock resistance.

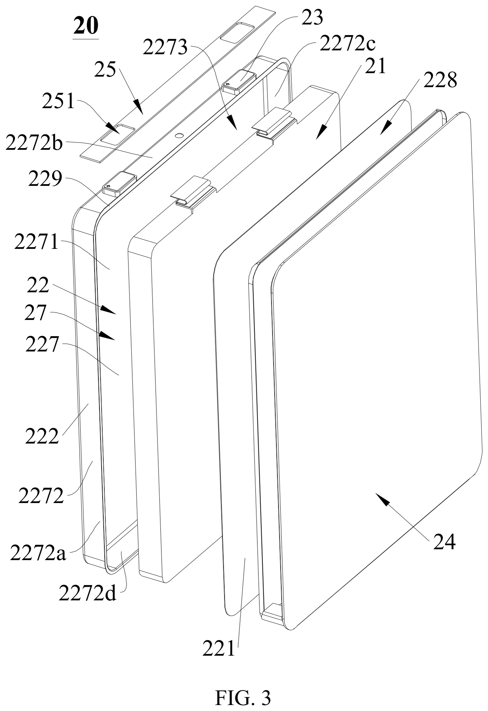

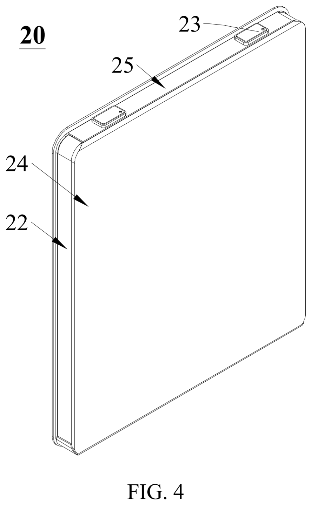

Referring to FIG. 3 and FIG. 4, FIG. 3 is a schematic structural exploded view of a battery cell according to one or more embodiments, and FIG. 4 is a schematic structural diagram of a battery cell according to one or more embodiments. The battery cell 20 refers to the smallest unit constituting the battery 100. The battery cell 20 includes a top cover 228, a housing 22, an electrode assembly 21, and other functional components.

The top cover 228 is a component that fits an opening 2273 of the housing 22 to isolate the internal environment of the battery cell 20 from the external environment. The shape of the top cover 228 may be adapted to the shape of the housing 22 to cooperate with the housing 22. Optionally, the top cover 228 may be made of a material (for example, aluminum alloy) with certain hardness and strength, so that the top cover 228 is less prone to deformation when subjected to extrusion or collision, allowing the battery cell 20 to have a higher structural strength and improved safety performance. The top cover 228 may also be made of various materials, the materials including, but not limited to copper, iron, aluminum, stainless steel, aluminum alloy, plastic, and the like. In some embodiments, an insulating member may be disposed on an inner side of the top cover 228. The insulating member may be configured to isolate the electrical connection components within the housing 22 from the top cover 228 to reduce the risk of a short circuit. For example, the insulating member may be made of plastic, rubber, or the like.

The housing 22 is an assembly configured to cooperate with the top cover 228 to form the internal environment of the battery cell 20, where the formed internal environment may be used to accommodate the electrode assembly 21, an electrolyte, and other components. The housing 22 and the top cover 228 may be independent components, and an opening 2273 may be provided in the housing 22, so that the top cover 228 covers the opening 2273 to form the internal environment of the battery cell 20. Without limitation, the top cover 228 and the housing 22 may also be integrated. Specifically, the top cover 228 and the housing 22 may form a shared connection surface before other components are disposed inside the housing, and then the top cover 228 covers the housing 22 when inside of the housing 22 needs to be enclosed. The housing 22 may be of various shapes and sizes, such as a cuboid shape, a cylindrical shape, and a hexagonal prism shape. Specifically, the shape of the housing 22 may be determined based on the specific shape and size of the electrode assembly 21. The housing 22 may be made of various materials, the materials including, but not limited to copper, iron, aluminum, stainless steel, aluminum alloy, plastic, and the like.

The electrode assembly 21 is a component in which electrochemical reactions take place in the battery cell 20. The housing 22 may contain one or more electrode assemblies 21. The electrode assembly 21 is mainly formed by winding or stacking a positive electrode plate and a negative electrode plate, and a separator typically disposed between the positive electrode plate and the negative electrode plate. The portions of the positive electrode plate and the negative electrode plate with active substances constitute a body portion of the electrode assembly 21, and the portions of the positive electrode plate and the negative electrode plate without active substances separately constitute a tab. A positive electrode tab and a negative electrode tab may both be located at one end of the body portion or be located at both ends of the body portion respectively. During the charging and discharging process of the battery cell 20, a positive electrode active substance and a negative electrode active substance react with the electrolyte, and the tabs are connected to the electrode connector 23 to form a current loop.

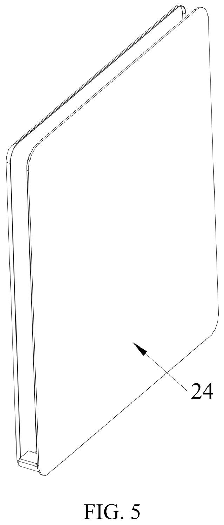

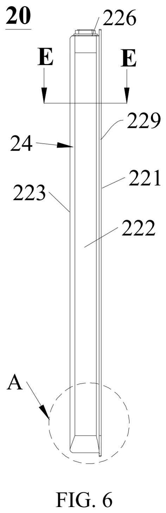

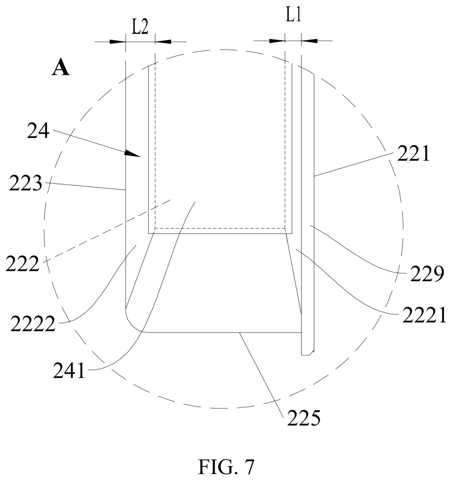

Referring to FIG. 5 to FIG. 7, FIG. 5 is a schematic structural diagram of an insulating film according to one or more embodiments, FIG. 6 is a schematic structural diagram of a second surface of a battery cell according to one or more embodiments, and FIG. 7 is a schematic diagram of portion A in FIG. 6 enlarged. In combination with FIG. 1 to FIG. 5, according to some embodiments of the present application, an embodiment of the present application provides a battery cell 20. The battery cell 20 includes a housing 22, the housing 22 including a first surface 221, a second surface 222, a third surface 223, and a flange 229, where the flange 229 is disposed around the first surface 221 and connected to the first surface 221, the first surface 221 and the third surface 223 are opposite each other, and the second surface 222 is connected between the flange 229 and the third surface 223; and an insulating film 24, wrapped around an exterior of the housing 22, the insulating film 24 wrapping around at least a portion of the first surface 221, at least a portion of the flange 229, at least a portion of the third surface 223, and at least a portion of the second surface 222. The insulating film 24 is folded from the flange 229 to the second surface 222 to form a first folded region 2221, the insulating film 24 is folded from the third surface 223 to the second surface 222 to form a second folded region 2222, and along a direction from the first surface 221 to the third surface 223, a dimension L 1 of the first folded region 2221 is smaller than a dimension L2 of the second folded region 2222.

Specifically, the insulating film 24 may have insulating properties. The flange 229 and the first surface 221 may be located in a same plane. The flange 229 may extend around an edge of the first surface 221. The flange 229 may be used to connect to the top cover 228. The insulating film 24 may be fully attached to the second surface 222 or may be partially attached to the second surface 222. The insulating film 24 may fully wrap around the first surface 221 or partially wrap around the first surface 221. The insulating film 24 may fully wrap around the second surface 222 or partially wrap around the second surface 222. The insulating film 24 may fully wrap around the third surface 223 or partially wrap around the third surface 223. The insulating film 24 may fully wrap around the flange 229 or partially wrap around the flange 229.

The insulating film 24 being folded from the flange 229 to the second surface 222 refers to the insulating film 24 being bent between a side of the flange 229 facing the first surface 221 and a side of the insulating film 24 facing away from the first surface 221, and extending to the second surface 222. The first folded region 2221 is the portion of the insulating film 24 extending from the flange 229 to the second surface 222. The insulating film 24 being folded from the third surface 223 to the second surface 222 refers to the insulating film 24 being bent at an intersection of the second surface 222 and the third surface 223, and extending to the second surface 222. The second folded region 2222 is the portion of the insulating film 24 extending from the third surface 223 to the second surface 222. The dimension L1 of the first folded region 2221 refers to the length of the first folded region 2221 along the direction from the first surface 221 to the third surface 223. The dimension L2 of the second folded region 2222 refers to the length of the second folded region 2222 along the direction from the first surface 221 to the third surface 223.

By the above method, each of the first surface 221, the flange 229, the third surface 223, and the second surface 222 is wrapped with the insulating film 24, and the insulating film 24 is also capable of sufficiently wrapping around the housing 22 when the housing 22 is provided with a flange 229, the housing 22 is well protected by the insulating film 24, and the stability of the battery cell 20 is improved. Additionally, when wrapping the insulating film 24 around a battery cell 20 with a flange 229, the insulating film 24 used for wrapping a rectangular battery cell 20 without a flange 229 can be directly used, eliminating the need for separately customizing the shape of the insulating film 24, which is conducive to cost savings.

According to some embodiments of the present application, the insulating film 24 is an integral structure.

By the above method, an integral insulating film 24 is more conducive to wrapping around the housing 22 through simple conventional processes such as folding. Compared to an insulating film 24 with a spliced structure, the insulating film 24 does not require additional splicing steps, making the production of the battery cell 20 more convenient.

Referring further to FIG. 1 to FIG. 7, according to some embodiments of the present application, a portion of the second surface 222 is exposed between the first folded region 2221 and the second folded region 2222 for connecting a first adhesive (not shown in the figure) or a first insulating sheet 241.

The portion of the second surface 222 exposed between the first folded region 2221 and the second folded region 2222 may be disposed close to the center of the second surface 222 or may be disposed close to an edge of the second surface 222. The housing 22 may be in communication with the external environment through the portion of the second surface 222 exposed between the first folded region 2221 and the second folded region 2222.

In one embodiment, the insulating film 24 is wrapped around the second surface 222. The portion of the insulating film 24 wrapped around the second surface 222 is exposed through the portion of the second surface 222 exposed between the first folded region 2221 and the second folded region 2222. In another embodiment, the insulating film 24 is partially wrapped around the second surface 222. The portion of the second surface 222 exposed between the first folded region 2221 and the second folded region 2222 is formed by enclosing the edge of the first folded region 2221 and the edge of the second folded region 2222.

The portion of the second surface 222 exposed between the first folded region 2221 and the second folded region 2222 may be attached to the first insulating sheet 241 or may be filled with the first adhesive. The first insulating sheet 241 may be a sheet-like structure with insulating properties. The first insulating sheet 241 may fit and be fixed to the portion of the second surface 222 exposed between the first folded region 2221 and the second folded region 2222. The first adhesive may be filled onto the portion of the second surface 222 exposed between the first folded region 2221 and the second folded region 2222, and is bonded to the housing 22.

The first insulating sheet 241 or the first adhesive may be part of the battery cell 20 or may be part of the battery 100 not included in the battery cell 20.

By the above method, when the second surface 222 is required to be attached to the first insulating sheet 241 or filling with the first adhesive, the first insulating sheet 241 or the first adhesive can be directly fixed to the portion of the second surface 222 exposed between the first folded region 2221 and the second folded region 2222, allowing the adhesive or insulating sheet to be more conveniently connected to the battery cell 20, facilitating the assembly of the battery cell 20.

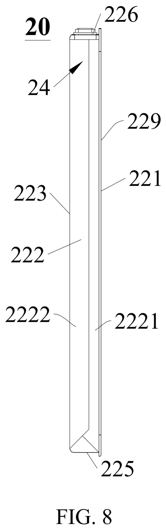

Referring to FIG. 8, FIG. 8 is another schematic structural diagram of a second surface of a battery cell according to one or more embodiments. In combination with FIG. 1 to FIG. 7, according to some embodiments of the present application, the first folded region 2221 and the second folded region 2222 are arranged to overlap.

The first folded region 2221 and the second folded region 2222 being arranged to overlap refers to the first folded region 2221 at least partially covering the second folded region 2222, or the second folded region 2222 at least partially covering the first folded region 2221. The first folded region 2221 and the second folded region 2222 may fully cover the second surface 222 or may partially cover the second surface 222.

By the above method, the overlapping first folded region 2221 and second folded region 2222 provide good protection to the second surface 222, the insulating film 24 can better cover the second surface 222, and the insulation effect of the battery cell 20 is better.

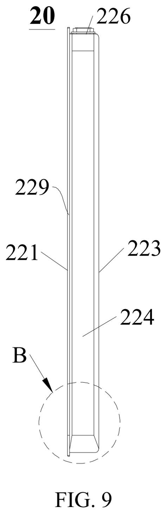

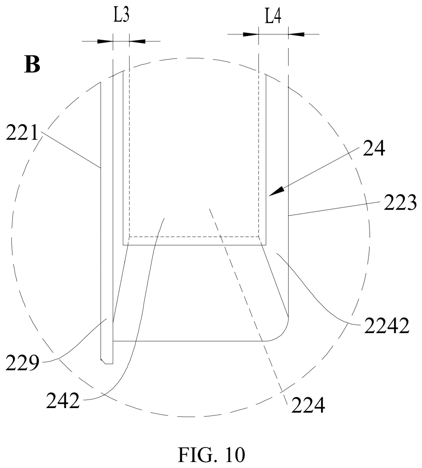

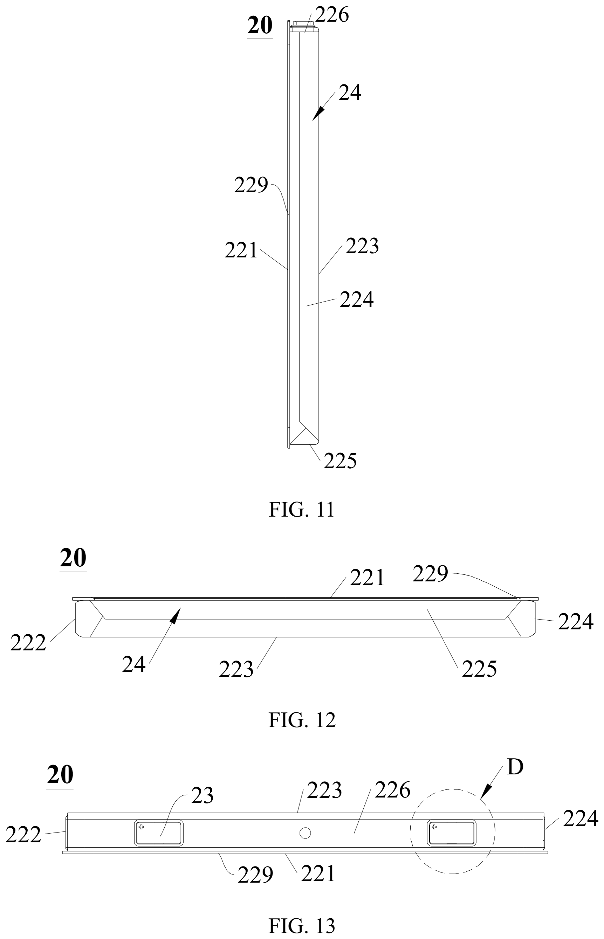

Referring to FIG. 9 to FIG. 11, FIG. 9 is a schematic structural diagram of a fourth surface of a battery cell according to one or more embodiments, FIG. 10 is a schematic diagram of portion B in FIG. 9 enlarged, and FIG. 11 is another schematic structural diagram of a fourth surface of a battery cell according to one or more embodiments. In combination with FIG. 1 to FIG. 8, according to some embodiments of the present application, a fourth surface 224 of the housing 22 is disposed opposite the second surface 222. One side of the insulating film 24 is also disposed on the fourth surface 224, the insulating film 24 is folded from the flange 229 to the fourth surface 224 to form a third folded region 2241, the insulating film 24 is folded from the third surface 223 to the fourth surface 224 to form a fourth folded region 2242, and along the direction from the first surface 221 to the third surface 223, a dimension L3 of the third folded region 2241 is smaller than a dimension L4 of the fourth folded region 2242.

Specifically, the fourth surface 224 may be disposed adjacent to the first surface 221 and the third surface 223. The insulating film 24 being folded from the flange 229 to the fourth surface 224 refers to the insulating film 24 being bent between the side of the flange 229 facing the first surface 221 and the side of the insulating film 24 facing away from the first surface 221, and extending to the fourth surface 224. The third folded region 2241 is the portion of the insulating film 24 extending from the flange 229 to the fourth surface 224. The insulating film 24 being folded from the third surface 223 to the fourth surface 224 refers to the insulating film 24 being bent at an intersection of the fourth surface 224 and the third surface 223, and extending to the fourth surface 224. The fourth folded region 2242 is the portion of the insulating film 24 extending from the third surface 223 to the fourth surface 224. The insulating film 24 may be fully attached to the fourth surface 224 or may be partially attached to the fourth surface 224.

The dimension L3 of the third folded region 2241 refers to the length of the third folded region 2241 along the direction from the first surface 221 to the third surface 223. The dimension L4 of the fourth folded region 2242 refers to the length of the fourth folded region 2242 along the direction from the first surface 221 to the third surface 223.

By the above method, at least a portion of the fourth surface 224 can be wrapped with the insulating film 24, the insulating film 24 can more comprehensively wrap around the housing 22, isolating the housing 22 from the external environment, enhancing the stability of the battery cell 20.

According to some embodiments of the present application, a portion of the fourth surface 224 is exposed between the third folded region 2241 and the fourth folded region 2242 for connecting a second adhesive (not shown in the figure) or a second insulating sheet 242.

The portion of the fourth surface 224 exposed between the third folded region 2241 and the fourth folded region 2242 may be disposed close to the center of the fourth surface 224 or may be disposed close to an edge of the fourth surface 224. The housing 22 may be in communication with the external environment through the portion of the fourth surface 224 exposed between the third folded region 2241 and the fourth folded region 2242.

In one embodiment, the insulating film 24 is wrapped around the fourth surface 224. The portion of the insulating film 24 wrapped around the fourth surface 224 is exposed through the portion of the fourth surface 224 exposed between the third folded region 2241 and the fourth folded region 2242. In another embodiment, the insulating film 24 is partially wrapped around the fourth surface 224. The portion of the fourth surface 224 exposed between the third folded region 2241 and the fourth folded region 2242 is formed by enclosing the edge of the third folded region 2241 and the edge of the fourth folded region 2242.

The portion of the fourth surface 224 exposed between the third folded region 2241 and the fourth folded region 2242 may be attached to the second insulating sheet 242 or may be filled with the second adhesive. The second insulating sheet 242 may be a sheet-like structure with insulating properties. The second insulating sheet 242 may fit and be fixed to the portion of the fourth surface 224 exposed between the third folded region 2241 and the fourth folded region 2242. The second adhesive may be filled onto the portion of the fourth surface 224 exposed between the third folded region 2241 and the fourth folded region 2242 and bonded to the housing 22.

The second insulating sheet 242 or the second adhesive may be part of the battery cell 20 or may be part of the battery 100 not included in the battery cell 20.

By the above method, when the fourth surface 224 is required to be attached to the second insulating sheet 242 or filling with the second adhesive, the second insulating sheet 242 or the second adhesive can be directly fixed to the portion of the fourth surface 224 exposed between the third folded region 2241 and the fourth folded region 2242, allowing the adhesive or insulating sheet to be more conveniently connected to the battery cell 20, facilitating the assembly of the battery cell 20.

According to some embodiments of the present application, the third folded region 2241 and the fourth folded region 2242 are arranged to overlap.

The third folded region 2241 and the fourth folded region 2242 being arranged to overlap refers to the third folded region 2241 at least partially covering the fourth folded region 2242, or the fourth folded region 2242 at least partially covering the third folded region 2241. The third folded region 2241 and the fourth folded region 2242 may fully cover the fourth surface 224 or may partially cover the fourth surface 224.

By the above method, the overlapping third folded region 2241 and fourth folded region 2242 provide good protection to the fourth surface 224, the insulating film 24 can better cover the fourth surface 224, and the insulation effect of the battery cell 20 is better.

Referring to FIG. 12, FIG. 12 is a schematic structural diagram of a fifth surface of a battery cell according to one or more embodiments. In combination with FIG. 1 to FIG. 11, according to some embodiments of the present application, a fifth surface 225 of the housing 22 is disposed adjacent to the first surface 221 and the third surface 223, the fifth surface 225 of the housing 22 is also disposed adjacent to the second surface 222 and the fourth surface 224, and the insulating film 24 fully covers the fifth surface 225.

By the above method, the fifth surface 225 can also be wrapped with the insulating film 24, the insulating film 24 can further wrap around the housing 22, isolating the housing 22 from the external environment, improving the stability of the battery cell 20.

According to some embodiments of the present application, a sixth surface 226 of the housing 22 is disposed opposite the fifth surface 225, the sixth surface 226 of the housing 22 is located between the second surface 222 and the fourth surface 224, the sixth surface 226 of the housing 22 is also located between the first surface 221 and the third surface 223, and the insulating film 24 covers at least a portion of the sixth surface 226. The insulating film 24 may partially cover the sixth surface 226 or may fully cover the sixth surface 226.

By the above method, at least a portion of the sixth surface 226 can be wrapped with the insulating film 24, the insulating film 24 can more comprehensively wrap around the housing 22, isolating the housing 22 from the external environment, enhancing the stability of the battery cell 20.

According to some embodiments of the present application, the insulating film 24 is folded from the flange 229 to the sixth surface 226 to form a fifth folded region 2261, the insulating film 24 is folded from the third surface 223 to the sixth surface 226 to form a sixth folded region 2262, and along the direction from the first surface 221 to the third surface 223, a dimension L5 of the fifth folded region 2261 is smaller than a dimension L6 of the sixth folded region 2262.

Specifically, the insulating film 24 being folded from the flange 229 to the sixth surface 226 refers to the insulating film 24 being bent between the side of the flange 229 facing the first surface 221 and the side of the insulating film 24 facing away from the first surface 221, and extending to the sixth surface 226. The fifth folded region 2261 is the portion of the insulating film 24 extending from the flange 229 to the sixth surface 226. The insulating film 24 being folded from the third surface 223 to the sixth surface 226 refers to the insulating film 24 being bent at an intersection of the sixth surface 226 and the third surface 223, and extending to the sixth surface 226. The sixth folded region 2262 is the portion of the insulating film 24 extending from the third surface 223 to the sixth surface 226.

The dimension L5 of the fifth folded region 2261 refers to the length of the fifth folded region 2261 along the direction from the first surface 221 to the third surface 223. The dimension L6 of the sixth folded region 2262 refers to the length of the sixth folded region 2262 along the direction from the first surface 221 to the third surface 223.

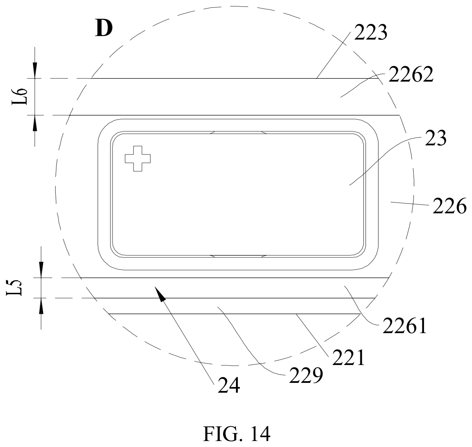

By the above method, before the insulating film 24 is folded from the flange 229 and the third surface 223 to the sixth surface 226, the dimensions of an end of the insulating film 24 forming the fifth folded region 2261 and an end forming the sixth folded region 2262 are more similar, simplifying the process of wrapping the insulating film 24 around the battery cell 20. Referring to FIG. 13 and FIG. 14, FIG. 13 is a schematic structural diagram of a sixth surface of a battery cell according to one or more embodiments, and FIG. 14 is a schematic diagram of portion D in FIG. 13 enlarged. In combination with FIG. 1 to FIG. 12, according to some embodiments of the present application, the battery cell 20 further includes an electrode connector 23, and the electrode connector 23 protrudes from the fourth surface 224 or the sixth surface 226.

The electrode connector 23 may be configured to electrically connect to the electrode assembly 21 to output or input electrical energy of the battery cell 20. In some embodiments, the electrode connector 23 may include a positive electrode connector 23 and a negative electrode connector 23 for current output and connection to an external circuit. The electrode connector 23 may include a terminal post or the like.

The position of the electrode connector 23 may be arranged according to actual conditions. In one specific embodiment, the electrode connector 23 protrudes from the fourth surface 224. In another specific embodiment, the electrode connector 23 protrudes from the sixth surface 226.

By the above method, the electrode connector 23 protruding from the fourth surface 224 or the sixth surface 226 achieves connection to an external circuit, making the battery cell 20 convenient to use.

According to some embodiments of the present application, the housing 22 includes a top cover 228 and an integrally formed housing body 227 and flange 229. The housing body 227 includes a bottom wall 2271 and a side wall 2272. One end of the side wall 2272 is connected to the bottom wall 2271, and another end is connected to the flange 229. The top cover 228 is connected to the flange 229 to form an accommodating space 27.

The side wall 2272 includes a first side wall 2272a, a second side wall 2272b, a third side wall 2272c, and a fourth side wall 2272d connected in sequence end-to-end. The first side wall 2272a is disposed opposite the third side wall 2272c. The second side wall 2272b is disposed opposite the fourth side wall 2272d.

A side of the top cover 228 facing away from the housing body 227 constitutes the first surface 221. A side of the bottom wall 2271 facing away from the top cover 228 constitutes the third surface 223. A side of the first side wall 2272a facing away from the accommodating space 27 constitutes the second surface 222. A side of the third side wall 2272c facing away from the accommodating space 27 constitutes the fourth surface 224. A side of the second side wall 2272b facing away from the accommodating space 27 constitutes the sixth surface 226. A side of the fourth side wall 2272d facing away from the accommodating space 27 constitutes the fifth surface 225. The electrode connector 23 is disposed on the fourth surface 224 or the sixth surface 226.

Specifically, the first side wall 2272a and the third side wall 2272c may be located between the second side wall 2272b and the fourth side wall 2272d. The accommodating space 27 is configured to accommodate the electrode assembly 21.

The top cover 228 may be the side with the largest area in the housing 22. The shape of the top cover 228 may match the flange 229. For example, when the flange 229 is plate-shaped, the top cover 228 is plate-shaped. The connection methods between the top cover 228 and the flange 229 include, but are not limited to, welding, bonding, snap-fit connection, and the like.

By the above method, the top cover 228 can be well connected to the housing body 227 through the flange 229, and the electrode connector 23 extends from the fourth surface 224 or the sixth surface 226, achieving connection to an external circuit, making the battery cell 20 convenient to use.

Referring further to FIG. 1 to FIG. 14, according to some embodiments of the present application, the battery cell further includes a top patch 25, a through-hole 251 is formed on the top patch 25, the electrode connector 23 is disposed on the sixth surface 226, a portion of the electrode connector 23 is located in the through-hole 251, a portion of the sixth surface 226 is exposed between the fifth folded region 2261 and the sixth folded region 2262 for connecting the top patch 25, and an edge of the top patch 25 is connected to the insulating film 24.

The top patch 25 may have insulating properties. Functional components may be disposed on the top patch 25. In some embodiments, a breather valve component (not shown in the figure) for releasing internal pressure when the internal pressure or temperature of the battery cell 20 reaches a threshold may also be disposed on the top patch 25. A through-hole 251 through which the electrode connector 23 can pass may be provided on the top patch 25.

The portion of the sixth surface 226 exposed between the fifth folded region 2261 and the sixth folded region 2262 may be disposed close to the center of the sixth surface 226. The housing 22 may be in communication with the external environment through the portion of the sixth surface 226 exposed between the fifth folded region 2261 and the sixth folded region 2262. The portion of the sixth surface 226 exposed between the fifth folded region 2261 and the sixth folded region 2262 may be exposed through the insulating film 24 or may be formed by enclosing the edge of the fifth folded region 2261 and the sixth folded region 2262. The top patch 25 may fit the portion of the sixth surface 226 exposed between the fifth folded region 2261 and the sixth folded region 2262. The electrode connector 23 is located at the portion of the sixth surface 226 exposed between the fifth folded region 2261 and the sixth folded region 2262 and passes through the through-hole 251. The connection methods between the top patch 25 and the insulating film 24 include bonding, welding, and the like.

By the above method, the top patch 25 can further isolate the sixth surface 226 from the external environment, preventing the sixth surface 226 from being scratched and reducing the risk of a short circuit in the battery cell 20. Additionally, the top patch 25 can be well fixed to the portion of the sixth surface 226 exposed between the fifth folded region 2261 and the sixth folded region 2262, the electrode connector 23 can be in communication with the external environment through a fourth window, and the battery cell 20 has good stability.

Referring further to FIG. 1 to FIG. 14, according to some embodiments of the present application, the insulating film 24 at the sixth surface 226 is arranged in an overlap manner and covers the portion of the sixth surface 226 excluding the electrode connector 23.

The insulating film 24 at the sixth surface 226 being arranged in an overlap manner refers to the portion of the insulating film 24 extending from the first surface 221 to the sixth surface 226 and the portion of the insulating film 24 extending from the third surface 223 to the sixth surface 226 being arranged to overlap. For example, the portion of the insulating film 24 extending from the first surface 221 to the sixth surface 226 covers a part of the sixth surface 226. The portion of the insulating film 24 extending from the third surface 223 to the sixth surface 226 covers the remaining part of the sixth surface 226 and at least partially covers the side of the portion of the insulating film 24 extending from the first surface 221 to the sixth surface 226 facing away from the sixth surface 226.

By the above method, the sixth surface 226 of the housing 22 is enclosed within the insulating film 24, fully isolated from the external environment, and the insulation effect of the battery cell 20 is better.

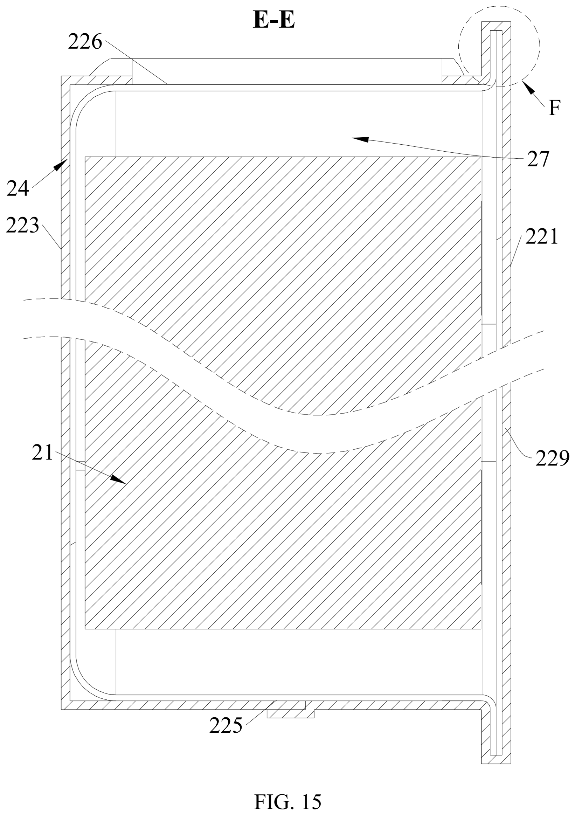

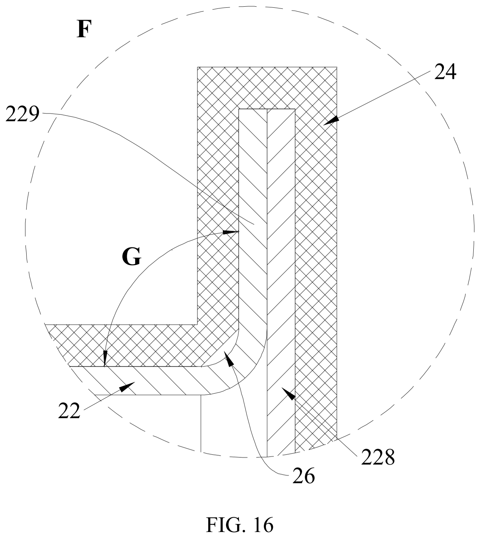

Referring to FIG. 15 and FIG. 16, FIG. 15 is a schematic cross-sectional view along line E-E in FIG. 6, and FIG. 16 is a schematic diagram of portion F in FIG. 15 enlarged. In combination with FIG. 1 to FIG. 14, according to some embodiments of the present application, an angle G is formed between a surface adjacent to the first surface 221 and the flange 229, and a gap is formed between the insulating film 24 and the housing 22 at the angle. The specific angle of the angle G may be 45 degrees, 90 degrees, or the like. In this embodiment, the angle G is 90 degrees.

The insulating film 24 may be fully attached to the flange 229 and the surface adjacent to the first surface 221, forming a gap only at the angle G. Alternatively, the insulating film 24 may be partially attached to the flange 229 and the surface adjacent to the first surface 221, forming gaps at the flange 229, the angle G, and the surface adjacent to the first surface 221. The insulating film 24 may have a chamfered shape at the angle G. The insulating film 24 may wrap around the angle G and form a gap with the housing 22.

By the above method, the insulating film 24 does not need to fully attach to the angle G, the insulating film 24 may be wrapped more easily, making the production of the battery cell 20 more convenient.

According to some embodiments of the present application, at the angle G, the housing 22 and the insulating film 24 cooperate to form a sealed space 26. The insulating film 24 isolates the sealed space 26 from the external environment.

By the above method, the housing 22 at the angle is isolated from the external environment within the sealed space 26, allowing the insulating film 24 to provide good protection for the housing 22 even without fully attaching to the angle G, making the production of the battery cell 20 convenient and ensuring good stability.

According to some embodiments of the present application, the present application further provides a battery 100, including the battery cell 20 according to any one of the above solutions. The battery 100 may be an energy storage apparatus or the like. The energy storage apparatus is a type of battery 100 that can be used in power grids, household, or commercial scenarios for storing and/or releasing electrical energy.

According to some embodiments of the present application, the present application further provides an electric apparatus, including the battery 100 according to any one of the above solutions, where the battery 100 is configured to supply power to the electric apparatus.

The electric apparatus may be a mobile phone, a computer, a vehicle, or any device or system using the battery 100 as described above.

Finally, in a specific application scenario, the battery cell 20 includes a housing 22, the housing 22 including a first surface 221, a second surface 222, a third surface 223, and a flange 229, where the flange 229 is disposed around the first surface 221 and connected to the first surface 221, the first surface 221 and the third surface 223 are opposite each other, and the second surface 222 is connected between the flange 229 and the third surface 223; and an insulating film 24, wrapped around an exterior of the housing 22, the insulating film 24 covering at least a portion of the first surface 221, at least a portion of the flange 229, at least a portion of the third surface 223, and at least a portion of the second surface 222. The insulating film 24 is folded from the flange 229 to the second surface 222 to form a first folded region 2221, the insulating film 24 is folded from the third surface 223 to the second surface 222 to form a second folded region 2222, and along a direction from the first surface 221 to the third surface 223, a dimension of the first folded region 2221 is smaller than a dimension of the second folded region 2222. By the above method, each of the first surface 221, the flange 229, the third surface 223, and the second surface 222 is wrapped with the insulating film 24, and the insulating film 24 is also capable of sufficiently wrapping around the housing 22 when the housing 22 is provided with a flange 229, the housing 22 is well protected by the insulating film 24, and the stability of the battery cell 20 is improved.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, **characterized by** comprising:
a housing, the housing comprising a first surface, a second surface, a third surface, and a flange, wherein the flange is disposed around the first surface and connected to the first surface, the first surface and the third surface are opposite each other, and the second surface is connected between the flange and the third surface; and
an insulating film, wrapped around an exterior of the housing, the insulating film wrapping around at least a portion of the first surface, at least a portion of the flange, at least a portion of the third surface, and at least a portion of the second surface;
wherein the insulating film is folded from the flange to the second surface to form a first folded region, the insulating film is folded from the third surface to the second surface to form a second folded region, and along a direction from the first surface to the third surface, a dimension of the first folded region is smaller than a dimension of the second folded region.

2. The battery cell according to claim 1, **characterized in that** the insulating film is an integral structure.

3. The battery cell according to claim 1 or 2, **characterized in that** a portion of the second surface is exposed between the first folded region and the second folded region for connecting a first adhesive or a first insulating sheet.

4. The battery cell according to claim 1 or 2, **characterized in that** the first folded region and the second folded region are arranged to overlap.

5. The battery cell according to any one of claims 1 to 4, **characterized in that** a fourth surface of the housing is disposed opposite the second surface, the insulating film is folded from the flange to the fourth surface to form a third folded region, the insulating film is folded from the third surface to the fourth surface to form a fourth folded region, and along the direction from the first surface to the third surface, a dimension of the third folded region is smaller than a dimension of the fourth folded region.

6. The battery cell according to claim 5, **characterized in that** a portion of the fourth surface is exposed between the third folded region and the fourth folded region for connecting a second adhesive or a second insulating sheet.

7. The battery cell according to claim 5, **characterized in that** the third folded region and the fourth folded region are arranged to overlap.

8. The battery cell according to any one of claims 5 to 7, **characterized in that** a fifth surface of the housing is disposed adjacent to the first surface and the third surface, the fifth surface of the housing is also disposed adjacent to the second surface and the fourth surface, and the insulating film fully covers the fifth surface.

9. The battery cell according to claim 8, **characterized in that** a sixth surface of the housing is disposed opposite the fifth surface, the sixth surface of the housing is located between the second surface and the fourth surface, the sixth surface of the housing is also located between the first surface and the third surface, and the insulating film covers at least a portion of the sixth surface.

10. The battery cell according to claim 9, **characterized in that** the insulating film is folded from the flange to the sixth surface to form a fifth folded region, the insulating film is folded from the third surface to the sixth surface to form a sixth folded region, and along the direction from the first surface to the third surface, a dimension of the fifth folded region is smaller than a dimension of the sixth folded region.

11. The battery cell according to claim 9 or 10, **characterized in that** the battery cell further comprises an electrode connector, and the electrode connector protrudes from the fourth surface or the sixth surface.

12. The battery cell according to any one of claims 9 to 11, **characterized in that** the housing comprises a top cover and an integrally formed housing body and flange, wherein the housing body comprises a bottom wall and a side wall, one end of the side wall is connected to the bottom wall, another end is connected to the flange, and the top cover is connected to the flange to form an accommodating space;
the side wall comprises a first side wall, a second side wall, a third side wall, and a fourth side wall connected in sequence end-to-end, the first side wall is disposed opposite the third side wall, and the second side wall is disposed opposite the fourth side wall; and
a side of the top cover facing away from the housing body constitutes the first surface, a side of the bottom wall facing away from the top cover constitutes the third surface, a side of the first side wall facing away from the accommodating space constitutes the second surface, a side of the third side wall facing away from the accommodating space constitutes the fourth surface, a side of the second side wall facing away from the accommodating space constitutes the sixth surface, and a side of the fourth side wall facing away from the accommodating space constitutes the fifth surface.

13. The battery cell according to claim 10, **characterized in that** the battery cell further comprises a top patch, a through-hole is formed on the top patch, an electrode connector is disposed on the sixth surface, a portion of the electrode connector is located in the through-hole, a portion of the sixth surface is exposed between the fifth folded region and the sixth folded region for connecting the top patch, and an edge of the top patch away from the electrode connector is connected to the insulating film.

14. The battery cell according to claim 11, **characterized in that** the insulating film at the sixth surface is arranged in an overlap manner and covers the portion of the sixth surface excluding the electrode connector.

15. The battery cell according to any one of claims 1 to 14, **characterized in that** an angle is formed between a surface adjacent to the first surface and the flange, and a gap is formed between the insulating film and the housing at the angle.

16. The battery cell according to claim 15, **characterized in that** at the angle, the housing and the insulating film cooperate to form a sealed space.

17. A battery, **characterized by** comprising the battery cell according to any one of claims 1 to 16.

18. An electric apparatus, **characterized in that** the electric apparatus comprises a battery, the battery being the battery according to claim 17, wherein the battery is configured to supply power to the electric apparatus.
